# EUROPÄISCHE PATENTSCHRIFT

(11) **EP 3 424 180 B1**
(45) Veröffentlichungstag und Bekanntmachung des Hinweises auf die Patenterteilung: **29.01.2020**
(21) Anmeldenummer: 17703942.7
(22) Anmeldetag: 02.02.2017
(51) Int. Cl.: H04L 12/12

(54) **BUSSYSTEM UND VERFAHREN ZUM BETREIBEN EINES BUSSYSTEMS**
BUS SYSTEM AND METHOD FOR OPERATING A BUS SYSTEM
SYSTÈME DE BUS ET PROCÉDÉ POUR FAIRE FONCTIONNER UN SYSTÈME DE BUS

(30) Priorität: 04.03.2016 DE 102016103928
(43) Veröffentlichungstag der Anmeldung: 09.01.2019
(73) Patentinhaber: Eaton Intelligent Power Limited, Dublin 4 (IE)
(72) Erfinder: HANSING, Matthias, 53604 Bad Honnef (DE); HELLER, Franz, 53757 Sankt Augustin (DE)
(74) Vertreter: Eaton IP Group EMEA
(86) Internationale Anmeldenummer: PCT/EP2017/052249
(87) Internationale Veröffentlichungsnummer: WO 2017/148645

(56) Entgegenhaltungen:
- EP-A1- 2 903 206
- US-A1- 2013 067 060
- US-A1- 2014 208 132
- US-A1- 2015 281 020

## Beschreibung

Die vorliegende Erfindung betrifft eine Busanordnung und ein Verfahren zum Betreiben einer Busanordnung.

Eine Busanordnung kann beispielsweise in der Automatisierungstechnik eingesetzt werden. Eine Busanordnung weist typisch einen Koordinator und mehrere Teilnehmer auf. Die Teilnehmer können als Aktoren oder Sensoren realisiert sein. Die Aktoren können Schaltgeräte wie Schütze, Motorstarter und Leistungsschalter, Befehlsgeräte und Frequenzumrichter sein.

Dokument EP 2 903 206 A1 beschreibt ein Verfahren zum Aktivieren eines entfernten Teilnehmers durch einen lokalen Teilnehmer. Der lokale Teilnehmer ist an einen lokalen Medienkonverter angeschlossen. Ebenso ist der entfernte Teilnehmer an einen entfernten Medienkonverter angeschlossen. Der lokale Medienkonverter ist mit dem entfernten Medienkonverter über ein Übertragungsmedium gekoppelt und kann diesem ein anfängliches Aktivierungssignal senden. Ein Transceiver des entfernten Medienkonverters empfängt das anfängliche Aktivierungssignal, erzeugt ein elektrisches Aktivierungssignal und sendet dieses an eine elektrische Verbrauchereinheit des entfernten Medienkonverters. Beim Empfangen des elektrischen Aktivierungssignals erzeugt die elektrische Verbrauchereinheit eine elektrische Verbrauchsänderung des entfernten Medienkonverters, wie etwa eine Spannungs- oder Stromverbrauchsschwankung. Eine Detektionseinheit des entfernten Teilnehmers erzeugt ein Aktivierungsinformationssignal, wenn sie die Änderung des elektrischen Verbrauchs erfasst. Die Detektionseinheit sendet das Aktivierungsinformationssignal an eine Zentraleinheit des entfernten Teilnehmers.

Eine Aufgabe der vorliegenden Erfindung ist es, eine Busanordnung und ein Verfahren zum Betreiben einer Busanordnung bereitzustellen, bei denen ein Teilnehmer rückwärts aktiviert werden kann.

Die Aufgabe wird mit den Gegenständen der unabhängigen Patentansprüche gelöst. Weiterbildungen und Ausgestaltungen sind jeweils Gegenstand der abhängigen Ansprüche.

In einer Ausführungsform umfasst eine Busanordnung einen Koordinator, einen ersten Teilnehmer, einen zweiten Teilnehmer und einen Bus. Der Bus umfasst eine erste Signalleitung, die den ersten Teilnehmer und den Koordinator koppelt, eine zweite Signalleitung, die den zweiten Teilnehmer an den ersten Teilnehmer anschließt, und mindestens eine Busleitung, die den Koordinator mit dem ersten und dem zweiten Teilnehmer verbindet. Dabei ist der Koordinator ausgelegt, über die mindestens eine Busleitung dem zweiten Teilnehmer ein Telegramm mit einem Befehl zu senden, über die zweite Signalleitung den ersten Teilnehmer zu aktivieren.

Mit Vorteil wird somit der erste Teilnehmer vom zweiten Teilnehmer aktiviert, auch wenn der erste Teilnehmer zwischen dem Koordinator und dem zweiten Teilnehmer am Bus angekoppelt ist und somit näher zum Koordinator als der zweite Teilnehmer ist. Der erste Teilnehmer wird somit in Rückwärtsrichtung aktiviert.
In einer Ausführungsform sendet der Koordinator über die mindestens eine Busleitung ausschließlich dem zweiten Teilnehmer ein Telegramm mit dem Befehl, über die zweite Signalleitung den ersten Teilnehmer zu aktivieren. Dieses Telegramm ist nicht an den ersten Teilnehmer oder an weitere Teilnehmer gerichtet, sondern ausschließlich an den zweiten Teilnehmer. Dieses Telegramm umfasst somit eine Seriennummer oder eine Teilnehmeradresse des zweiten Teilnehmers. Mit Vorteil wird genau ein Teilnehmer, hier der zweite Teilnehmer, angesprochen, damit dieser seinen Vorgänger am Bus, hier den ersten Teilnehmer, aktiviert.

In einer Ausführungsform sendet der Koordinator an alle Teilnehmer über die mindestens eine Busleitung ein Telegramm, das eine erste Teilnehmeradresse enthält, ab. Der erste Teilnehmer speichert im aktivierten Zustand die erste Teilnehmeradresse in einem ersten flüchtigen Speicher des ersten Teilnehmers.

In einer Ausführungsform aktiviert der Koordinator in einer Konfigurationsphase über die erste Signalleitung den ersten Teilnehmer und sendet über die mindestens eine Busleitung das Telegramm, das die erste Teilnehmeradresse enthält, an alle Teilnehmer und somit auch an den ersten und den zweiten Teilnehmer. Der erste Teilnehmer speichert die erste Teilnehmeradresse im ersten flüchtigen Speicher. Dadurch, dass genau ein Teilnehmer aktiviert ist, nämlich in diesem Falle der erste Teilnehmer, speichert ausschließlich dieser Teilnehmer die über die mindestens eine Busleitung bereitgestellte Teilnehmeradresse. Ein derartiges über die Busleitung an alle Teilnehmer abgesandtes Telegramm kann auch als Broadcast-Nachricht bezeichnet werden. Da der erste Teilnehmer die erste Teilnehmeradresse nunmehr in der Betriebsphase, die von der Konfigurationsphase eingeleitet wurde, weiter im ersten flüchtigen Speicher speichert, kann er mittels der ersten Teilnehmeradresse adressiert werden. Die Aktivierung des ersten Teilnehmers kann direkt vom Koordinator erfolgen oder, falls weitere Teilnehmer zwischen dem Koordinator und dem ersten Teilnehmer angeordnet sind, über den dem ersten Teilnehmer vorangehenden Teilnehmer. Der erste Teilnehmer wird somit in Vorwärtsrichtung aktiviert.

In einer Ausführungsform aktiviert der erste Teilnehmer in der Konfigurationsphase über die zweite Signalleitung den zweiten Teilnehmer. Der Koordinator sendet über die mindestens eine Busleitung ein Telegramm, das eine zweite Teilnehmeradresse enthält, an alle Teilnehmer und damit an den ersten und den zweiten Teilnehmer. Der zweite Teilnehmer speichert die zweite Teilnehmeradresse in einem zweiten flüchtigen Speicher. Da im Zeitraum, in dem das Telegramm mit der zweiten Teilnehmeradresse gesendet wird, nur der zweite Teilnehmer aktiviert ist, übernimmt ausschließlich der zweite Teilnehmer die zweite Teilnehmeradresse in seinen flüchtigen Speicher. Somit wird der zweite Teilnehmer in Vorwärtsrichtung aktiviert. Der erste und der zweite flüchtige Speicher verlieren in einer Ausschaltphase ihren Speicherinhalt.

In einer Ausführungsform umfasst die Busanordnung einen zusätzlichen Teilnehmer, der in der Konfigurationsphase am Bus zwischen dem Koordinator und dem ersten Teilnehmer angeschlossen ist und nach der Konfigurationsphase entfernt wird. Der Koordinator sendet in einer Wiederanlaufphase nach der Konfigurationsphase über die mindestens eine Busleitung dem zweiten Teilnehmer das Telegramm mit dem Befehl, über die zweite Signalleitung den ersten Teilnehmer zu aktivieren. Mit Vorteil lässt sich somit der erste Teilnehmer auch bei einem fehlenden Teilnehmer zwischen dem Koordinator und dem ersten Teilnehmer, nämlich in Rückwärtsrichtung, aktivieren.

In einer Ausführungsform wird der erste Teilnehmer in einer Ausschaltphase, die zwischen der Konfigurationsphase und einer weiteren Konfigurationsphase liegt, gegen einen weiteren ersten Teilnehmer ausgetauscht. Der Koordinator aktiviert in der weiteren Konfigurationsphase den weiteren ersten Teilnehmer über die erste Signalleitung und/oder mittels des zweiten Teilnehmers über die zweite Signalleitung.

In einer Ausführungsform umfasst der Koordinator einen Schalter und führt die weitere Konfigurationsphase nach Betätigung des Schalters durch.

In einer Ausführungsform umfasst der erste Teilnehmer einen ersten Stromsensor. Der zweite Teilnehmer umfasst eine schaltbare Stromquelle. Die zweite Signalleitung koppelt den ersten Stromsensor mit der schaltbaren Stromquelle.

In einer Ausführungsform aktiviert der zweite Teilnehmer den ersten Teilnehmer dadurch dass der zweite Teilnehmer die schaltbare Stromquelle zwischen einem leitenden Zustand und einem nicht-leitenden Zustand umschaltet und der erste Teilnehmer die Änderung eines durch die zweite Signalleitung fließenden Stroms mit dem ersten Stromsensor detektiert.

In einer Ausführungsform umfasst der erste Teilnehmer einen ersten Schalter, der seriell zum ersten Stromsensor angeordnet ist. Der zweite Teilnehmer umfasst einen zweiten Stromsensor, der mit der schaltbaren Stromquelle gekoppelt ist. Der zweite Stromsensor detektiert den durch die zweite Signalleitung fließenden Strom.

In einer Ausführungsform aktiviert der erste Teilnehmer den zweiten Teilnehmer dadurch, dass der erste Teilnehmer den ersten Schalter zwischen einem leitenden Zustand und einem nicht-leitenden Zustand umschaltet. Der zweite Teilnehmer detektiert die Änderung eines durch die zweite Signalleitung fließenden Stroms mit dem zweiten Stromsensor.

In einer Ausführungsform schließt die erste Signalleitung den ersten Teilnehmer an den Koordinator an. Der erste Teilnehmer und der Koordinator sind somit direkt und permanent über die erste Signalleitung aneinander angeschlossen.

In einer Ausführungsform ist der zweite Teilnehmer direkt und permanent über die zweite Signalleitung an den ersten Teilnehmer angeschlossen. Der zweite Teilnehmer ist nicht direkt an die erste Signalleitung angeschlossen. Der zweite Teilnehmer ist ausschließlich über den ersten Teilnehmer mit der ersten Signalleitung gekoppelt.

Entsprechend ist der Koordinator nicht direkt an die zweite Signalleitung angeschlossen. Der Koordinator ist über den ersten Teilnehmer mit der zweiten Signalleitung gekoppelt.

An die mindestens eine Busleitung ist sowohl der Koordinator wie auch der erste Teilnehmer als auch der zweite Teilnehmer direkt angeschlossen.

In einer Ausführungsform weist der Bus die mindestens eine Busleitung sowie eine weitere Busleitung auf. Somit weist der Bus genau zwei Busleitungen, nämlich eine erste und eine zweite Busleitung, auf. Die erste und die zweite Busleitung können gemäß dem Schnittstellen-Standard TIA/EIA-485 A, auch EIA-485 oder RS-485 bezeichnet, betrieben werden.

In einer Ausführungsform umfasst die Busanordnung einen oder mehrere weitere Teilnehmer, die an die mindestens eine Busleitung angeschlossen sind. Ein weiterer Teilnehmer kann über eine dritte Signalleitung an den zweiten Teilnehmer angeschlossen sein. Der oder die weiteren Teilnehmer können jedoch auch beispielsweise zwischen dem Koordinator und dem ersten Teilnehmer angeordnet sein.

In einer Ausführungsform ist mindestens einer der Teilnehmer als Aktor, Messgerät oder Sensor realisiert. Der Aktor kann ein Schaltgerät - wie ein Schütz, ein Motorstarter oder ein Leistungsschalter - , ein Stellgerät, ein Befehlsgerät, ein Meldegerät, ein Bediengerät oder ein Frequenzumrichter sein.

In einer Ausführungsform ist die Konfigurationsphase Teil einer Betriebsphase. Auf die Betriebsphase folgen eine Ausschaltphase und dann eine weitere Betriebsphase, welche mit einer Wiederanlaufphase beginnt. Im weiteren Verlauf können sich weitere Betriebsphasen, die jeweils zu Anfang eine Wiederanlaufphase aufweisen, und Ausschaltphasen abwechseln. Somit folgt die Wiederanlaufphase der Konfigurationsphase.

In einer Ausführungsform erkennt der Koordinator in der Betriebsphase einen Ausfall eines Teilnehmers, wie des ersten und/oder des zweiten Teilnehmers, und speichert in einem nicht-flüchtigen Speicher Informationen über den Ausfall des Teilnehmers, wie etwa des ersten und/oder des zweiten Teilnehmers. Der Koordinator registriert die ausgefallenen Teilnehmer als ausgefallen. Der Ausfall eines Teilnehmers kann beispielsweise durch einen Defekt im Teilnehmer oder durch die Wegnahme des Teilnehmers und damit ein Fehlen des Teilnehmers ausgelöst sein.

In einer Ausführungsform kann der Koordinator einen ausgefallenen Teilnehmer wieder aktivieren. Die Aktivierung kann dabei in Vorwärtsrichtung wie auch in Rückwärtsrichtung erfolgen.

In einer Ausführungsform ist ausschließlich ein einzelner Teilnehmer ausgefallen. Es sind somit nicht zwei oder mehrere hintereinander am Bus sich befindende Teilnehmer ausgefallen. Ein einzelner Teilnehmer kann in Vorwärtsrichtung aktiviert werden. Dazu sendet der Koordinator ein Telegramm an den Teilnehmer, der zwischen dem Koordinator und dem ausgefallenen Teilnehmer und zwar unmittelbar vor dem ausgefallenen Teilnehmer liegt. Das Telegramm enthält einen Befehl zum Abgeben eines Signals an die Signalleitung zur Aktivierung des ausgefallenen Teilnehmers. Der ausgefallene Teilnehmer bestätigt seine Aktivierung über die mindestens eine Busleitung und erhält seine Teilnehmeradresse. Anschließend speichert der Koordinator die Information über die Einsatzfähigkeit des nunmehr nicht mehr ausgefallenen Teilnehmers im nicht-flüchtigen Speicher.

In einer Ausführungsform ist beispielsweise der zweite Teilnehmer ausgefallen und der erste Teilnehmer funktionsfähig. Somit sendet der Koordinator über die mindestens eine Busleitung ein Telegramm an den ersten Teilnehmer. Der erste Teilnehmer aktiviert über die zweite Signalleitung den zweiten Teilnehmer und der zweite Teilnehmer bestätigt die Aktivierung gegenüber dem Koordinator. Anschließend speichert der Koordinator die Information über die Einsatzfähigkeit des zweiten Teilnehmers im nicht-flüchtigen Speicher.

In einer Ausführungsform sind zwei oder mehrere hintereinanderliegende Teilnehmer ausgefallen. Derjenige ausgefallene Teilnehmer, der am nächsten zum Koordinator liegt, kann mittels des vorhergehenden Teilnehmers wie oben beschrieben in Vorwärtsrichtung aktiviert werden. Ist jedoch die Aktivierung in Vorwärtsrichtung nicht möglich, weil beispielsweise ein Teilnehmer nicht aktivierbar oder nicht vorhanden ist, so kann auch eine Aktivierung in Rückwärtsrichtung erfolgen.

In einer Ausführungsform sind beispielsweise der erste Teilnehmer sowie ein zwischen dem Koordinator und dem ersten Teilnehmer liegender weiterer Teilnehmer ausgefallen. Der Koordinator kann zu einem späteren Zeitpunkt in der Betriebsphase über die mindestens eine Busleitung ein Telegramm an den zweiten Teilnehmer absenden. Der zweite Teilnehmer aktiviert über die zweite Signalleitung den ersten Teilnehmer, sodass der erste Teilnehmer die Aktivierung über die mindestens eine Busleitung an den Koordinator bestätigt. Anschließend speichert der Koordinator die Information über die Einsatzfähigkeit des ersten Teilnehmers im nicht-flüchtigen Speicher. Der Koordinator sendet die erste Teilnehmeradresse an alle Teilnehmer. Da ausschließlich der erste Teilnehmer aktiviert ist, übernimmt ausschließlich der erste Teilnehmer die erste Teilnehmeradresse in seinen nicht-flüchtigen Speicher. Somit ist trotz Lücke zwischen erstem Teilnehmer und Koordinator der erste Teilnehmer mit Hilfe des zweiten Teilnehmers in Rückwärtsrichtung aktivierbar.

In einer Ausführungsform umfasst ein Verfahren zum Betreiben einer Busanordnung ein Senden eines Telegramms von einem Koordinator über mindestens eine Busleitung an einen zweiten Teilnehmer mit einem Befehl, dass der zweite Teilnehmer über eine zweite Signalleitung einen ersten Teilnehmer aktiviert. Der Bus umfasst eine erste Signalleitung, die den ersten Teilnehmer und den Koordinator koppelt, die zweite Signalleitung, die den zweiten Teilnehmer an den ersten Teilnehmer anschließt, und die mindestens eine Busleitung, die den Koordinator mit dem ersten und dem zweiten Teilnehmer verbindet.

Mit Vorteil ist der erste Teilnehmer rückwärts aktivierbar.

In einer Ausführungsform umfasst der erste Teilnehmer einen ersten Stromsensor. Der zweite Teilnehmer umfasst eine schaltbare Stromquelle. Die zweite Signalleitung koppelt den ersten Stromsensor mit der schaltbaren Stromquelle.

Die Busanordnung ist ausgelegt, Teilnehmer in zwei Richtungen zu adressieren. Die Busanordnung erfasst einen Teilnehmer in zwei Richtungen. Die Busanordnung ist ausgelegt, aus zwei Richtungen an einen Teilnehmer seine Teilnehmeradresse zuzuweisen. Die Busanordnung ist ausgelegt, eine geographische Teilnehmererkennung bei Segmentlücken adressaufwärts und adressabwärts durchzuführen. Ein Austausch von Busteilnehmern im Betrieb ist möglich, englisch als hot swap bezeichnet. Die Busanordnung kann auch als Bussystem bezeichnet werden

Die Busanordnung realisiert eine bidirektionale Adressierung von Teilnehmern. Das bidirektionale Verfahren implementiert eine geographische Ermittlung und Adressierung von Teilnehmern in der Busanordnung. Unter einer Adressierung ist im Folgenden häufig eine Adresszuweisung verstanden. Die Busanordnung realisiert eine bidirektionale Zuweisung von Teilnehmeradressen an die Teilnehmer. Das bidirektionale Verfahren implementiert eine geographische Ermittlung und Adresszuweisung von Teilnehmern in der Busanordnung.

Die Signalleitung, die zwei Teilnehmer physikalisch miteinander verbindet, kann bidirektional genutzt werden. Die Signalleitung ist eine Verbindungsleitung zwischen einer Signalausgangsschaltung einer Teilnehmers und einer Signaleingangsschaltung des nächsten Teilnehmers. So besteht die Möglichkeit, dass sich nach einer Erstadressierung auch Bussegmente neu einfügen lassen, indem die Adressierung nicht ausschließlich von links nach rechts, sondern auch von rechts nach links und damit in absteigender Adressfolge geographisch möglich ist. Somit kann sich nach einer ersten Adresszuweisung auch ein Bussegment neu einfügen lassen, indem die Adresszuweisung nicht ausschließlich von links nach rechts, sondern auch von rechts nach links und damit in absteigender Adressfolge geographisch erfolgt.

Bei der Erstinbetriebnahme der Busanordnung wird das Verfahren via der Signalleitungen verwendet. Alle Teilnehmer am Bus werden vom Koordinator sukzessiv in aufsteigender Adressfolge adressiert. Dieses Verfahren endet vor dem ersten fehlenden Teilnehmer bzw. am letztmöglich zu adressierenden Teilnehmer. Das heißt, allen Teilnehmern am Bus werden vom Koordinator sukzessiv in aufsteigender Adressfolge Teilnehmeradressen zugewiesen. Dieses Verfahren endet vor dem ersten fehlenden Teilnehmer bzw. am letztmöglichen Teilnehmer, dem eine Teilnehmeradresse zuzuweisen ist. Dabei stellen die Signalleitungen jeweils die geographische Position der Busteilnehmer sicher. Jeder Teilnehmer weist eine Geräte-Identität (Hersteller, Gerät, Version), englisch (Vendor, Device, Version) auf, die den Typ des Geräts angibt. Die Geräte-Identität kann auch Geräte ID genannt werden. Die Geräte ID wird dabei von jedem Teilnehmer ausgelesen und im Koordinator nicht flüchtig abgespeichert. Über dieses Verfahren lassen sich Teilnehmer einzeln, aber auch Teilnehmersegmente ein- und ausschalten und in einem dafür vorgesehenen Betriebsmodus darüber hinaus zusätzlich austauschen.

Ein Wiederanlauf eines Teilnehmer bzw. eines Teilnehmersegments ist durchführbar. Der Koordinator adressiert die Busteilnehmer typisch über die Signalleitungen von links nach rechts und damit in aufsteigender Adressfolge. Folglich kann der Koordinator den Busteilnehmern über die Signalleitungen von links nach rechts Teilnehmeradressen in aufsteigender Adressfolge zuweisen.

Entstehen nun in der Betriebsphase Teilnehmerlücken, gibt es bei einer bidirektionalen Adressierung nun zusätzlich die Möglichkeit vom nächsten, noch existenten Teilnehmer die Signalleitung zu nutzen. Das bedeutet, auch in absteigender Adressierungsrichtung lassen sich beliebige Teilnehmer geographisch erfassen. Bei einem Adressierungsprozedere in umgekehrter Richtung wird der zu adressierende Teilnehmer dann einen Strom an seinem Ausgang, der mit der Signalleitung zu einem adresshöheren Teilnehmer verbunden ist, messen können. Um aber diese umgekehrte Adressierungsrichtung überhaupt nutzen zu können, weist der adresshöhere Teilnehmer eine schaltbare Stromquelle auf.

Anders ausgedrückt, entstehen nun in der Betriebsphase Teilnehmerlücken, gibt es bei einer bidirektionalen Adresszuweisung nun zusätzlich die Möglichkeit vom nächsten, noch existenten Teilnehmer die Signalleitung zu nutzen. Das bedeutet, auch in absteigender Folge der Teilnehmeradressen lassen sich beliebige Teilnehmer geographisch erfassen. Bei einem Prozedere der Adresszuweisung in umgekehrter Richtung wird der Teilnehmer, dem eine Teilnehmeradresse zuzuweisen ist, dann einen Strom an seinem Ausgang, der mit der Signalleitung zu einem adresshöheren Teilnehmer verbunden ist, messen können. Um aber diese umgekehrte Richtung der Adresszuweisung überhaupt nutzen zu können, weist der adresshöhere Teilnehmer eine schaltbare Stromquelle auf.

Die Adressierung in umgekehrter Richtung, das heißt die Zuweisung von Teilnehmeradressen in umgekehrter Richtung, wird bei Ausfall von Segmenten und der Wiederankopplung als zusätzliche Option im Betrieb verwendet. Mittels Prüfung der Geräte-ID (Vendor, Device, Version, ...) lassen sich auch dann Teilnehmer tauschen, wenn ein spezieller (optionaler) Betriebsmode gewählt wurde. Aufgrund der gespeicherten Geräte ID und der geographisch erfassbaren Position ist der Koordinator in der Lage, jetzt auch andere Geräte neu adressieren und akzeptieren zu können. Der Koordinator ist somit in der Lage, aufgrund der gespeicherten Geräte ID und der geographisch erfassbaren Position jetzt auch anderen Geräten eine Teilnehmeradresse zuzuweisen und diese akzeptieren zu können.

Mit Vorteil ermöglicht der Einsatz von optionalen Teilnehmern in einem Bussystem aufgrund der zusätzlichen Adresszuweisungsvariante dem Anwender ein flexibles Handling.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:
- Figur 1: eine beispielhafte Ausführungsform einer Busanordnung,
- Figuren 2A bis 2H: eine beispielhafte Ausführungsform einer Busanordnung in verschiedenen Phasen,
- Figur 3: eine beispielhafte zeitliche Abfolge von Phasen in einer Busanordnung und
- Figur 4: eine beispielhafte Ausführungsform zweier Teilnehmer einer Busanordnung.

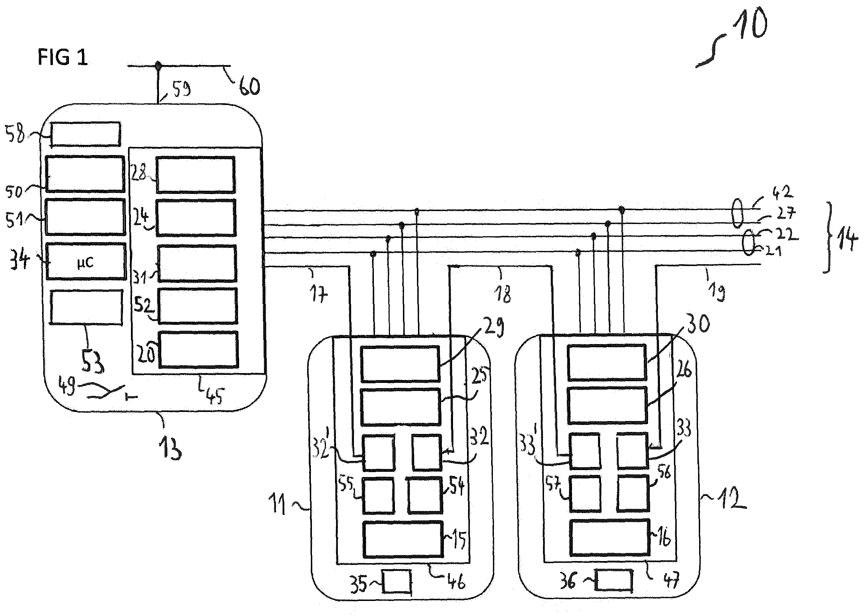

Figur 1 zeigt eine beispielhafte Ausführungsform einer Busanordnung 10, die einen ersten und einen zweiten Teilnehmer 11, 12, einen Koordinator 13 und einen Bus 14 umfasst. Der Koordinator 13 ist mit dem ersten und dem zweiten Teilnehmer 11, 12 über den Bus 14 verbunden. Der erste und der zweite Teilnehmer 11, 12 weisen jeweils einen Prozessorkern 15, 16 auf. Der Bus 14 umfasst eine erste Signalleitung 17, die einen Anschluss des Koordinators 13 mit einem Anschluss des ersten Teilnehmers 11 und damit beispielsweise mit einem Anschluss des Prozessorkerns 15 des ersten Teilnehmers 11 verbindet. Die erste Signalleitung 17 ist nicht direkt an den zweiten oder einen weiteren Teilnehmer 12 angeschlossen. Aus Gründen der Übersichtlichkeit sind die meisten Leitungen im Koordinator 13 und im ersten und zweiten Teilnehmer 11, 12 nicht eingezeichnet.

Weiter umfasst der Bus 14 eine zweite Signalleitung 18, die einen Anschluss des ersten Teilnehmers 11 an einen Anschluss des zweiten Teilnehmers 12 anschließt. Beispielsweise verbindet die zweite Signalleitung 18 den Prozessorkern 15 des ersten Teilnehmers 11 mit dem Prozessorkern 16 des zweiten Teilnehmers 12. Zusätzlich kann der Bus 14 eine dritte Signalleitung 19 umfassen, die einen Anschluss des zweiten Teilnehmers 12 mit einem nicht gezeigten dritten Teilnehmer verbindet. Der Koordinator 13 umfasst einen Prozessorkern 20, der an die erste Signalleitung 17 angeschlossen ist. Der Bus 14 ist als linearer Bus realisiert. Der Bus 14 kann als serieller Bus ausgebildet sein. Der Koordinator 13 kann als Master implementiert sein. Die Teilnehmer 11, 12 können als Slaves realisiert sein. Der Prozessorkern 15, 16, 20 kann als Mikroprozessor implementiert sein. Der Bus 14 ist nicht als ringförmiger Bus realisiert.

Der Prozessorkern 20 des Koordinators 13 ist über eine Signalausgangsschaltung 31, auch Sel Out Schaltung genannt, des Koordinators 13 an die erste Signalleitung 17 angeschlossen. Weiter ist der Prozessorkern 15 des ersten Teilnehmers 11 über eine Signaleingangsschaltung 32', aus Sel In Schaltung genannt, des ersten Teilnehmers 11 an die erste Signalleitung 17 und über eine Signalausgangsschaltung 32 des ersten Teilnehmers 11 an die zweite Signalleitung 18 angeschlossen. Der Prozessorkern 16 des zweiten Teilnehmers 12 ist über eine Signaleingangsschaltung 33' des zweiten Teilnehmers 12 an die zweite Signalleitung 18 angeschlossen und, falls ein dritter Teilnehmer vorhanden ist, über eine Signalausgangsschaltung 33 des zweiten Teilnehmers 12 an die dritte Signalleitung 19 angeschlossen.

Darüber hinaus umfasst der Bus 14 mindestens eine Busleitung 21, die den Koordinator 13 mit allen Teilnehmern und somit mit dem ersten und dem zweiten Teilnehmer 11, 12 verbindet. Ein Signal auf der mindestens einen Busleitung 21 erreicht alle Teilnehmer 11, 12. Der Bus 14 kann eine weitere Busleitung 22 umfassen, die den Koordinator 13 mit allen Teilnehmern 11, 12 verbindet. Die mindestens eine Busleitung 21 und die weitere Busleitung 22 können auch als erste und zweite Busleitung bezeichnet werden. Der Koordinator 13 umfasst einen Transceiver 24, der den Prozessorkern 20 mit der ersten und der zweiten Busleitung 21, 22 koppelt. Der erste und der zweite Teilnehmer 11, 12 umfassen ebenfalls jeweils einen Transceiver 25, 26 mit zwei Anschlüssen, die an die erste und die zweite Busleitung 21, 22 angeschlossen sind. Im ersten und zweiten Teilnehmer 11, 12 ist der Transceiver 25, 26 jeweils mit dem Prozessorkern 15, 16 gekoppelt. Die erste und die zweite Busleitung 21, 22 sowie die Transceiver 24 - 26 des Koordinators 13 und der Teilnehmer 11, 12 können gemäß TIA/EIA-485 A Standard implementiert sein.

Die Transceiver 24 - 26 des Koordinators 13 und der Teilnehmer 11, 12 können als Sende- und Empfangs-Transceiver ausgelegt und für den Halbduplexbetrieb realisiert sein.

Zusätzlich umfasst der Bus 14 eine Versorgungsleitung 27, die eine Spannungsversorgung 28 des Koordinators 13 mit einer Spannungsversorgung 29 des ersten Teilnehmers 11 und einer Spannungsversorgung 30 des zweiten Teilnehmers 12 verbindet. Die Spannungsversorgung 28, 29, 30 kann jeweils als Spannungsregulator realisiert sein.

Weiter kann der erste und der zweite Teilnehmer 11, 12 jeweils eine Applikationseinrichtung 35, 36 aufweisen. Die Applikationseinrichtung 35, 36 kann als Aktor-, Messgeräts- oder Sensor-Einrichtung implementiert sein. Somit können der erste und der zweite Teilnehmer 11, 12 als Aktor, Messgerät und/oder Sensor realisiert sein. Die Applikationseinrichtung 35 des ersten Teilnehmers 11 ist mit dem Prozessorkern 15 des ersten Teilnehmers 11 gekoppelt. Entsprechendes gilt für den zweiten Teilnehmer 12. Ferner umfasst der Bus 14 eine Bezugspotentialleitung 42, die einen Bezugspotentialanschluss des Koordinators 13 mit Bezugspotentialanschlüssen des ersten und des zweiten Teilnehmers 11, 12 verbindet. Der Koordinator 13 versorgt die Teilnehmer 11, 12 über die Versorgungsleitung 27 und die Bezugspotentialleitung 42 mit elektrischer Energie.

Darüber hinaus umfasst der Koordinator 13 einen Speicher 53, der mit dem Prozessorkern 20 oder einem Mikrocontroller 34 des Koordinators 13 verbunden ist. Der Speicher 53 des Koordinators 13 kann als nicht-flüchtiger Speicher realisiert sein, etwa als ein semi-permanenter Speicher wie etwa ein Electrically Erasable Programmable Read Only Memory, abgekürzt EEPROM, oder ein Flash-EEPROM. Weiter umfasst der Koordinator 13 einen flüchtigen Speicher 52.

Der erste Teilnehmer 11 umfasst einen ersten flüchtigen Speicher 54 und einen ersten nicht-flüchtigen Speicher 55, die an den Transceiver 25 angeschlossen sein können. Der zweite Teilnehmer 12 umfasst einen zweiten flüchtigen Speicher 56 und einen zweiten nicht-flüchtigen Speicher 57, die an den Transceiver 26 angeschlossen sein können. Der erste und der zweite nicht-flüchtige Speicher 55, 57 können beispielsweise permanente Speicher wie etwa ein Read Only Memory, abgekürzt ROM, ein Programmable Read Only Memory, abgekürzt PROM, oder ein One Time Programmable Baustein, kurz OTP Baustein, sein. Die flüchtigen Speicher 52, 54, 56 können jeweils als Random Access Memory, abgekürzt RAM, oder Flash-Speicher realisiert sein.

Der Koordinator 13 umfasst eine integrierte Schaltung 45, die als ASIC realisiert sein kann. Die integrierte Schaltung 45 kann die Spannungsversorgung 28, den Transceiver 24, die Signalausgangsschaltung 31, den flüchtigen Speicher 52 und den Prozessorkern 20 umfassen. Weiter umfasst der erste und der zweite Teilnehmer 11, 12 jeweils eine integrierte Schaltung 46, 47, die als ASIC realisiert sein kann. Die integrierte Schaltung 46 des ersten Teilnehmers 11 kann die Spannungsversorgung 29, den Transceiver 25, die Signaleingangsschaltung 32', die Signalausgangsschaltung 32, den ersten flüchtigen Speicher 54, den ersten nicht-flüchtigen Speicher 55 und den Prozessorkern 15 umfassen. Entsprechend kann die integrierte Schaltung 47 des zweiten Teilnehmers 12 realisiert sein.

Der Koordinator 13 umfasst einen weiteren Transceiver 58, der einen weiteren Busanschluss 59 mit dem Mikrocontroller 34 koppelt. Weiter umfasst die Busanordnung 10 einen Feldbus 60, der an den weiteren Busanschluss 59 angeschlossen ist. Der Koordinator 13 kann ein Gateway, Router oder Switch sein. Der Koordinator 13 weist einen Oszillator 50 auf. Der Oszillator 50 kann als RC Oszillator ausgeführt sein. Der Oszillator 50 kann zur Zeitsteuerung eingesetzt werden. Der Koordinator 13 kann einen weiteren Speicher 51, der als RAM oder Flash-Speicher realisiert ist, aufweisen.

Der Bus 14 ist als Flachbandkabel oder Rundkabel realisiert. Gemäß Figur 1 kann der Bus 14 z.B. aus fünf Adern bestehen. Alternativ kann der Bus 14 eine andere Anzahl von Adern, z.B. acht Adern, aufweisen.

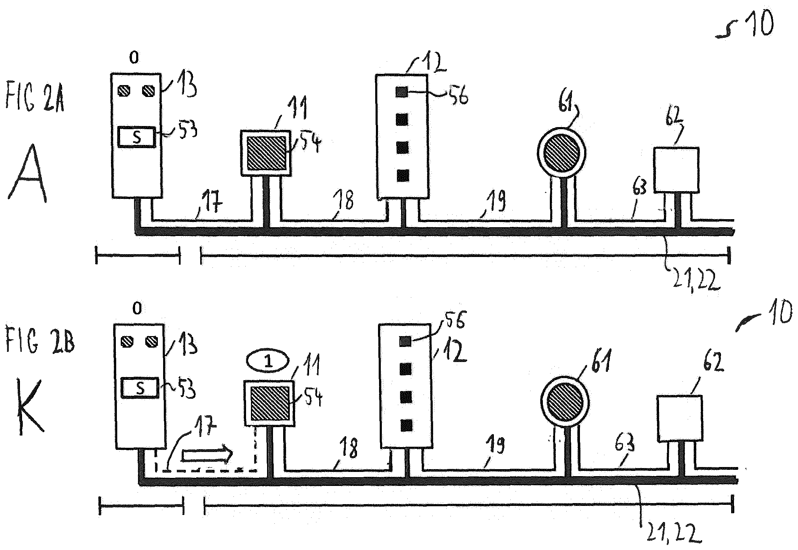

Die Funktionsweise der Busanordnung 10 gemäß Figur 1 wird anhand der Figuren 2A bis 2H näher erläutert.

Figuren 2A bis 2H zeigen eine beispielhafte Ausführungsform einer Busanordnung 10, die eine Weiterbildung der in Figur 1 gezeigten Ausführungsform ist. Die Busanordnung 10 umfasst den Koordinator 13, den ersten und den zweiten Teilnehmer 11, 12 sowie einen dritten und einen vierten Teilnehmer 61, 62. Der Koordinator 13 ist über die erste Signalleitung 17 direkt an den ersten Teilnehmer 11 angeschlossen. Der erste Teilnehmer 11 ist über die zweite Signalleitung 18 direkt an den zweiten Teilnehmer 12 angeschlossen. Entsprechend ist der zweite Teilnehmer 12 über die dritte Signalleitung 19 direkt an den dritten Teilnehmer 61 angeschlossen. Weiter ist der dritte Teilnehmer 61 über eine vierte Signalleitung 63 an den vierten Teilnehmer 62 angeschlossen. Die erste bis zur vierten Signalleitung 17, 18, 19, 63 bilden eine Daisy-Chain. Weiter ist der Koordinator 13 direkt an alle Teilnehmer 11, 12, 61, 62 über die mindestens eine Busleitung 21 und die weitere Busleitung 22, welche auch als erste und zweite Busleitung bezeichnet werden, angeschlossen.

In Figur 2A ist die Busanordnung 10 in einer Ausschaltphase A dargestellt. Die Ausschaltphase A kann beispielsweise vor einer Betriebsphase B sein, die mit einer Konfigurationsphase K beginnt. Alternativ kann die Ausschaltphase A vor einer weiteren Betriebsphase B' sein, die mit einer Wiederanlaufphase W beginnt. Der Koordinator 13 weist eine Adresse z.B. 0 auf. Im ersten bis zum vierten Teilnehmer 11, 12, 61, 62 sind keine Teilnehmeradressen gespeichert. In den Figuren 2B bis 2E werden die Teilnehmer 11, 12, 61, 62 von links nach rechts über den Koordinator 13 und mit Hilfe der Signalleitungen 17, 18, 19, 63 sukzessive adressiert (das heißt den Teilnehmern 11, 12, 61,62 werden sukzessive Teilnehmeradressen zugewiesen) und die geographischen Positionen und damit die Reihenfolge der Teilnehmer 11, 12, 61, 62 festgelegt.

In einer alternativen, nicht gezeigten Ausführungsform ist der Koordinator 13 über die erste Signalleitung 17 und einen oder mehrere weitere Teilnehmer sowie eine oder mehrere weitere Signalleitungen mit dem ersten Teilnehmer 11 gekoppelt.

Figur 2B zeigt die Busanordnung 10 gemäß Figur 2A in der Konfigurationsphase K. Der Koordinator 13 aktiviert über die erste Signalleitung 17 den ersten Teilnehmer 11. Um die Aktivierung anzudeuten, ist die erste Signalleitung 17 gestrichelt gezeichnet. Ein Pfeil gibt die Richtung der Aktivierung an. Nach der Aktivierung sendet der Koordinator 13 über die erste und die zweite Busleitung 21, 22 ein Telegramm, das eine erste Teilnehmeradresse enthält, an alle Teilnehmer 11, 12, 61, 62. Ausschließlich der aktivierte Teilnehmer, nämlich der erste Teilnehmer 11, übernimmt die im Telegramm enthaltene erste Teilnehmeradresse in seinen ersten flüchtigen Speicher 54. Die erste Teilnehmeradresse kann 1 sein.

Wie erläutert, aktiviert der Koordinator 13 seine Signalausgangsschaltung 31 und sendet die zu vergebene Teilnehmeradresse 1 als Broadcast über die RS 485 Busleitung/Datenleitung an alle Teilnehmer 11, 12, 61, 62. Nach dem Empfang prüfen dann alle Teilnehmer 11, 12, 61, 62 ihre Signaleingangsschaltung 32', 33', allerdings ist ausschließlich die Strecke zwischen dem Koordinator 13 und dem ersten Teilnehmer 11 aktiviert. Damit übernimmt auch der erste geographische Teilnehmer 11 neben dem Koordinator 13 die Teilnehmeradresse Nummer 1. Ab diesem Zeitpunkt nimmt dann dieser Teilnehmer 11 alle Nachrichten, die an die Teilnehmeradresse 1 gerichtet werden, dann auch entgegen.

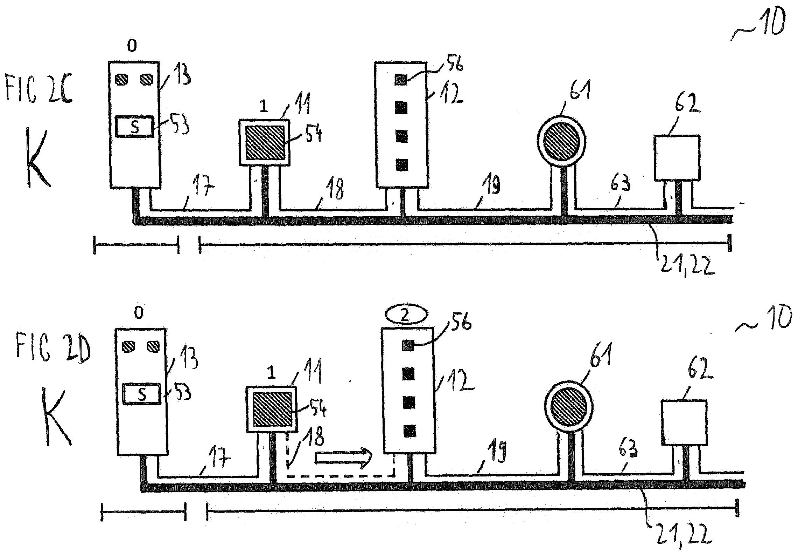

Figur 2C zeigt die bereits in Figuren 2A und 2B gezeigte Busanordnung 10 in einem weiteren Schritt der Konfigurationsphase K. Der Koordinator 13 nimmt eine Verbindung zum ersten Teilnehmer 1 über die erste und die zweite Busleitung 21, 22 auf, um eine erste Seriennummer des ersten Teilnehmers 11 auszulesen. Dazu sendet der Koordinator 13 ein Telegramm an alle Teilnehmer 11, 12, 61, 62, das die erste Teilnehmeradresse sowie den Befehl, die Seriennummer bereitzustellen, umfasst. Der Transceiver 25 des ersten Teilnehmers 11 erkennt, dass der erste Teilnehmer 11 angesprochen ist und bewirkt, dass der Prozessorkern 15 des ersten Teilnehmers 11 über die erste und die zweite Busleitung 21, 22 die erste Seriennummer an den Koordinator 13 sendet, der sie im nicht-flüchtigen Speicher 53 speichert. Dadurch ist der erste Teilnehmer 11 im Koordinator 13 registriert.

In Figur 2C ist der Koordinator 13 in der Lage, eine Verbindung zum ersten Teilnehmer 11 aufzunehmen und seine Daten abzufragen. Unter anderem wird die erste Seriennummer, etwa auch die Vendor ID, Version etc. ausgelesen und im Koordinator 13 mit der dazugehörigen ersten Teilnehmeradresse verknüpft und remanent gespeichert. Der Koordinator 13 setzt seine Signalausgangschaltung 31 zurück.

Figur 2D zeigt die Busanordnung 10, die bereits in den Figuren 2A bis 2C gezeigt ist, in einem weiteren Schritt der Konfigurationsphase K. Der Koordinator 13 sendet ein Telegramm an den ersten Teilnehmer 11 mit dem Befehl, die ausgangsseitige Signalleitung, also die zweite Signalleitung 18, zu aktivieren. Der erste Teilnehmer 11 erkennt mittels seines Transceivers 25, dass er angesprochen ist und aktiviert über ein Signal auf der zweiten Signalleitung 18 den zweiten Teilnehmer 12. Anschließend sendet der Koordinator 13 ein Telegramm an alle Teilnehmer 11, 12, 61, 62, das die zweite Teilnehmeradresse, z.B. 2, enthält. Da jedoch ausschließlich der zweite Teilnehmer 12 aktiviert ist, übernimmt ausschließlich der zweite Teilnehmer 12 die zweite Teilnehmeradresse in seinen zweiten flüchtigen Speicher 56. Als weiteren Schritt in der Konfigurationsphase K veranlasst der Koordinator 13 den zweiten Teilnehmer 12, die zweite Seriennummer bereitzustellen. Der zweite Teilnehmer 12 wird durch die Abspeicherung der zweiten Seriennummer im nicht-flüchtigen Speicher 53 des Koordinators 13 registriert.

Gemäß Figur 2D erhält der erste Teilnehmer 11 den Auftrag, seine Signalausgangsschaltung 32 zu aktivieren, so dass die Adressierung fortgeführt werden kann. Der Koordinator 13 sendet eine Broadcast-Nachricht für die Adressierung mit der Teilnehmeradresse 2.

Der erste Teilnehmer 11 erhält den Auftrag, seine Signalausgangsschaltung 32 zu aktivieren, so dass die Zuweisung der Teilnehmeradressen fortgeführt werden kann. Der Koordinator 13 sendet eine Broadcast-Nachricht mit der Teilnehmeradresse 2 für die Zuweisung der Teilnehmeradresse. Dieses Prozedere führt der Koordinator 13 solange fort, bis alle erfassbaren Teilnehmer eine Teilnehmeradresse zugewiesen bekommen haben. Folglich wird der dritte Teilnehmer 61 aktiviert und ihm eine dritte Teilnehmeradresse, etwa 3, zugewiesen sowie eine dritte Seriennummer des dritten Teilnehmers 61 abgefragt. Der vierte Teilnehmer 62 führt entsprechende Schritte durch.

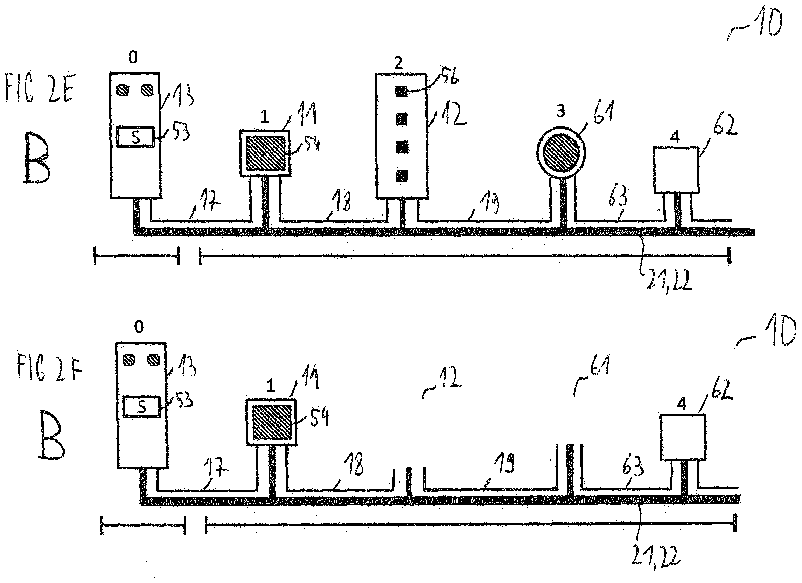

Figur 2E zeigt die Busanordnung 10, die bereits in Figuren 2A bis 2D gezeigt ist, in der Betriebsphase nach Abschluss der Konfigurationsphase K. Der Koordinator 13 ist nunmehr in der Lage, alle Teilnehmer 11, 12, 61, 62 über die Teilnehmeradressen zu adressieren. Die adressierten Teilnehmer 11, 12, 61, 62 werden inklusive Parameter- und Konfigurationsdaten (Seriennummern, Hersteller-Identität) remanent im Koordinator 13 gespeichert. Über die eindeutige Seriennummer lassen sich zuvor ermittelte Teilnehmer 11, 12, 61, 62, auch nach Ausfällen, durch den Koordinator 13 wieder ansprechen. Die adressierten Teilnehmer 11, 12, 61, 62 speichern sich ihre Teilnehmeradressen nicht remanent ab, so dass sie sich nach erneutem Power-up wieder wie zu Beginn, etwa wie in Figur 2A, verhalten können. Die adressierten Teilnehmer 11, 12, 61, 62 sind Teilnehmer, denen Teilnehmeradressen zugewiesen worden sind.

Figur 2F zeigt die Busanordnung 10, wie sie bereits in den Figuren 2A bis 2E erläutert ist, in der Betriebsphase B. In der Betriebsphase B können Teilnehmer ausfallen. In dem in Figur 2F gezeigten Beispiel sind der zweite und der dritte Teilnehmer 12, 61 ausgefallen. Der Koordinator 13 ist weiter in der Lage, Telegramme an die nicht ausgefallenen Teilnehmer 11, 62 über die erste und die zweite Busleitung 21, 22 zu senden und die nicht ausgefallenen Teilnehmer 11, 62 zu steuern oder ihre Daten abzufragen. Der Koordinator 13 erkennt den Ausfall der Teilnehmer, in diesem Fall des zweiten und des dritten Teilnehmers 12, 61, und speichert im nicht-flüchtigen Speicher 53 eine Information über den Ausfall der ausgefallenen Teilnehmer 12, 61, das heißt registriert diese als ausgefallen.

Auch nach Ausfall von Teilnehmern 12, 61 läuft die Busanordnung 10 weiter. Im in Figur 2F gezeigten Beispiel werden nun der zweite und der dritte Teilnehmer 12, 61 fehlend gemeldet. Der Koordinator 13 übernimmt die Rolle der ausgefallenen Teilnehmer 12, 61. Der flüchtige Speicher 54, 56 des oder der ausgefallenen Teilnehmer 12, 61 verliert während des Ausfalls in der Regel die Teilnehmeradresse.

Der Koordinator 13 ist derart konfiguriert, dass er einen oder mehrere ausgefallene Teilnehmer wieder aktiviert, beispielsweise azyklisch oder zu vorgegebenen Zeitpunkten. Ein ausgefallener Teilnehmer kann beispielsweise in einer Ausschaltphase A repariert werden. In einer Ausführungsform kann der ausgefallene Teilnehmer auch in einer Betriebsphase B entnommen und nach Reparatur wieder eingesetzt werden. Dieses Verfahren wird als Hot-Plug bezeichnet.

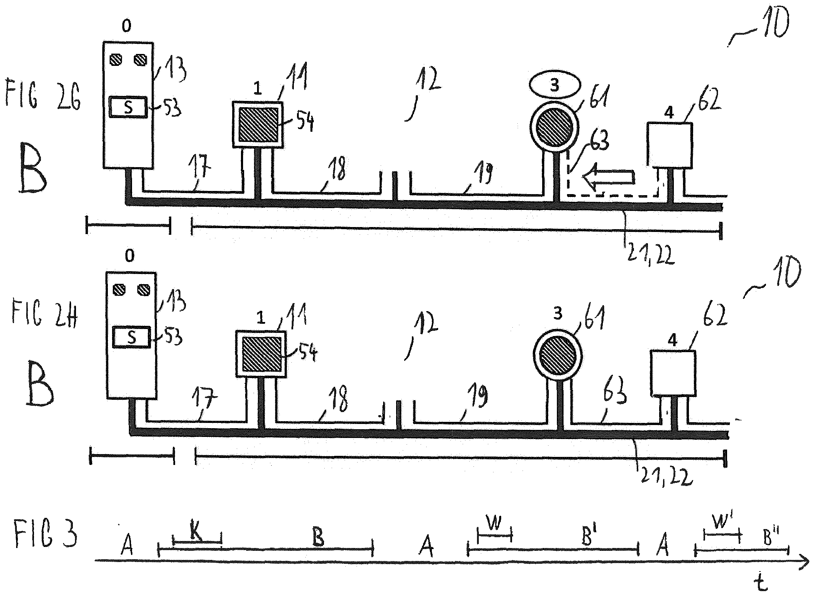

Figur 2G zeigt die beispielhafte Busanordnung 10, wie sie bereits in den Figuren 2A bis 2F gezeigt ist, in einem Teil der Betriebsphase B. Wie in Figur 2F gezeigt, sind zwei Teilnehmer, nämlich der zweite und der dritte Teilnehmer 12, 61, ausgefallen. Ausschließlich der dritte Teilnehmer 61 ist wieder vorhanden und soll wieder angekoppelt werden. Gemäß Figur 2G sendet zur Aktivierung der Koordinator 13 ein Telegramm über die erste und die zweite Busleitung 21, 22 an den nicht ausgefallenen vierten Teilnehmer 62. Gemäß einem in diesem Telegramm enthaltenen Befehl gibt der vierte Teilnehmer 62 über seine eingangsseitige Signalleitung 63 ein Signal an den dritten Teilnehmer 61 ab. Dadurch wird der dritte Teilnehmer 61 aktiviert. Der Koordinator 13 sendet ein Telegramm, das als Broadcast-Nachricht bezeichnet werden kann, an alle Teilnehmer 11, 12, 61, 62, welches die dritte Teilnehmeradresse enthält. Da ausschließlich der dritte Teilnehmer 61 aktiviert wird, übernimmt ausschließlich der dritte Teilnehmer 61 die dritte Teilnehmernummer und speichert sie beispielsweise in seinem flüchtigen Speicher ab. Somit kann durch das Ansprechen des dritten Teilnehmers 61 vom vierten Teilnehmer 62, das heißt durch das Aktivieren des dritten Teilnehmers 61 vom vierten Teilnehmer 62, die geografische Lage des dritten Teilnehmers 61 bestätigt werden. Der dritte Teilnehmer 61 kann wieder als aktiv im Koordinator 10 registriert werden. Somit ist eine Rückwärts-Adressierung, genauer eine Rückwärtsadresszuweisung, ermöglicht.

Der Koordinator 13 sendet über die mindestens eine Busleitung 21 ausschließlich dem vierten Teilnehmer 62 das Telegramm mit dem Befehl, über die vierte Signalleitung 63 den dritten Teilnehmer 61 zu aktivieren. Dieses Telegramm ist nicht an den ersten bis dritten Teilnehmer 11, 12, 61 oder an weitere Teilnehmer gerichtet. Dieses Telegramm ist somit nicht eine Broadcast-Nachricht oder ein Rundspruch. Dieses Telegramm kann z.B. somit eine vierte Seriennummer oder eine vierte Teilnehmeradresse des vierten Teilnehmers 62 zur eindeutigen Identifizierung des Adressaten, nämlich des vierten Teilnehmers 62, umfassen.

Aufgrund der bidirektionalen Signalleitungs-Funktion lassen sich beliebige Teilnehmer an die Position des dritten Teilnehmers 61 setzen. Der oben beschriebene Ablauf der Adresszuweisung kann damit in umgekehrter Reihenfolge zur Reihenfolge in der Konfigurationsphase K, das bedeutet von rechts nach links, erfolgen. Um die geographische Lage des dritten Teilnehmer 61 zu finden, kann ein Teilnehmer (z. B. der vierte Teilnehmer 62) gezielt dazu veranlasst werden, seine Signaleingangsschaltung zuzuschalten, um so einen Stromfluss überhaupt zu ermöglichen. Neue hinzugekommene Teilnehmer 61 werden jetzt veranlasst, ihre Signalausgangsschaltung zu aktivieren und auf Stromfluss zu prüfen. Damit kann der dritte Teilnehmer 61 geographisch ermittelt und online auf Verwendung an dieser Position geprüft werden.

Figur 2H zeigt die Busanordnung 10, die bereits in den Figuren 2A bis 2G gezeigt ist, nach Durchführung der anhand Figur 2G erläuterten Schritte. Der dritte Teilnehmer 61 hat seine Teilnehmeradresse 3 zurückerhalten und kann nach positiver Prüfung durch den Koordinator 13 in die Busanordnung 10 wieder aufgenommen werden. Der Koordinator 13 speichert in seinem nicht-flüchtigen Speicher 53, dass der dritte Teilnehmer 61 aktiv ist.

Figur 3 zeigt eine beispielhafte Ausführungsform des zeitlichen Verlaufs der Phasen. Die verschiedenen Phasen sind über einer Zeit t aufgetragen. Die Konfigurationsphase K wird zu Beginn der Betriebsphase B durchgeführt. Nach Durchführung der Koordinationsphase wird in der Betriebsphase B beispielsweise ein regulärer Betrieb der Busanordnung 10 durchgeführt. Nach der Betriebsphase B erfolgt eine Ausschaltphase A. In der Ausschaltphase A sind der Koordinator 13 und die Teilnehmer 11, 12, 61, 62 nicht mit elektrischer Energie versorgt. Auf die Ausschaltphase A folgt eine weitere Betriebsphase B'. Zu Beginn der weiteren Betriebsphase B' wird eine Wiederanlaufphase W durchgeführt. Nach der Wiederanlaufphase W wird in der weiteren Betriebsphase B' der reguläre Betrieb der Busanordnung 10 realisiert. Auf die weitere Betriebsphase B' können weitere Ausschaltphasen A und weitere Betriebsphasen B" folgen. Der in Figuren 2F bis 2G geschilderte Ausfall von Teilnehmern und die Aktivierung von Teilnehmern kann in jeder der Betriebsphasen B, B', B" erfolgen.

In der Wiederanlaufphase W führt der Koordinator 13 dieselben Schritte durch, um die Teilnehmeradressen den Teilnehmern zuzuordnen wie in der Konfigurationsphase K. Zusätzlich führt der Koordinator 13 einen Vergleich der in der Wiederanlaufphase W abgefragten Seriennummern mit den in seinem nicht-flüchtigen Speicher 53 gespeicherten Seriennummern durch.

Ein Bediener kann auch beispielsweise mittels eines Schalters 49 des Koordinators 13 die Busanordnung 10 zurücksetzen, sodass die Busanordnung 10 wieder mit einer Betriebsphase B, die eine Konfigurationsphase K aufweist, startet.

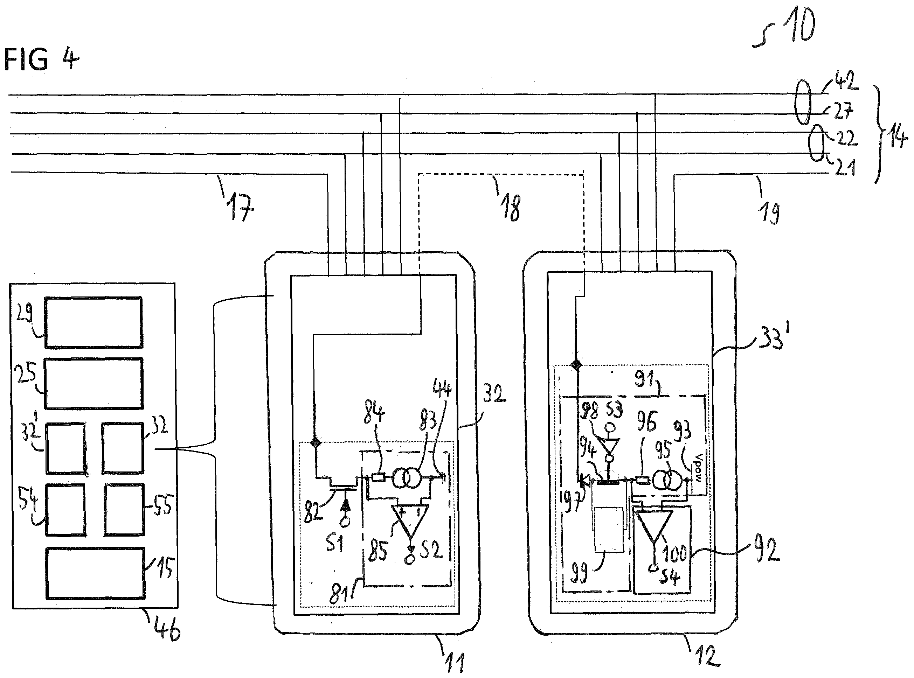

Figur 4 zeigt eine beispielhafte Ausführungsform des ersten und des zweiten Teilnehmers 11, 12, wie sie beispielsweise in der Busanordnung 10 gemäß Figuren 1 und 2A bis 2H realisiert werden kann. Die in Figur 4 gezeigte Ausführungsform kann auch unabhängig von den oben geschilderten Verfahren und Schaltungsdetails realisiert werden. Die Signalausgangsschaltung 32 des ersten Teilnehmers 11 umfasst ausgangsseitig einen ersten Stromsensor 81. Der erste Stromsensor 81 ist zwischen die zweite Signalleitung 18 und dem Bezugspotentialanschluss 44 angeordnet. Weiter umfasst die Signalausgangsschaltung 32 des ersten Teilnehmers 11 einen ersten Schalter 82, der seriell zum ersten Stromsensor 81 angeordnet ist. Die Serienschaltung, umfassend den ersten Schalter 82 und den ersten Stromsensor 81, koppelt die zweite Signalleitung 18 mit dem Bezugspotentialanschluss 44. Dabei ist der erste Schalter 82 an die zweite Signalleitung 18 und der erste Stromsensor 81 an den Bezugspotentialanschluss 44 angeschlossen.

Der erste Schalter 82 ist als Transistor realisiert. Der erste Schalter 82 kann als Feldeffekttransistor hergestellt sein, insbesondere als Metall-Oxid-Halbleiter Feldeffekttransistor. Der erste Stromsensor 81 umfasst eine Stromsenke 83 und einen Stromsenkenwiderstand 84, die seriell zueinander angeordnet sind. Weiter umfasst der Stromsensor 81 einen ersten Komparator 85. Die Eingänge des ersten Komparators 85 sind mit den Anschlüssen der Serienschaltung, umfassend die Stromsenke 83 und den Stromsenkenwiderstand 84, verbunden. Ein erster Eingang des ersten Komparators 85 ist somit an einen Knoten zwischen dem ersten Schalter 82 und dem ersten Stromsensor 81 angeschlossen. Ein zweiter Eingang des ersten Komparators 85 ist an den Bezugspotentialanschluss 44 angeschlossen. Der Prozessorkern 15 des ersten Teilnehmers 11 gibt ein Signal S1 an einen Steueranschluss des ersten Schalters 82 ab. Das Signal S1 ist ein von der Signalausgangsschaltung 32 zu übertragendes Signal. Ein Ausgang des ersten Stromsensors 81 ist mit einem Eingang des Prozessorkerns 15 des ersten Teilnehmers 11 gekoppelt. Der erste Stromsensor 81 gibt ein Stromdetektionssignal S2 ab. Ein Ausgang des ersten Komparators 85 ist an den Ausgang des ersten Stromsensors 81 angeschlossen.

Die Signaleingangsschaltung 33' des zweiten Teilnehmers 12 umfasst eine schaltbare Stromquelle 91. Die schaltbare Stromquelle 91 ist zwischen einem Versorgungsspannungsanschluss 93 und der zweiten Signalleitung 18 angeordnet. Die schaltbare Stromquelle 91 umfasst einen zweiten Schalter 94, der zwischen der zweiten Signalleitung 18 und der Versorgungsspannungsquelle 93 angeordnet ist. Zusätzlich umfasst die schaltbare Stromquelle 91 eine Stromquellenschaltung 95 und einen Stromquellenwiderstand 96, die seriell zueinander angeordnet sind. Darüber hinaus umfasst die schaltbare Stromquelle 91 eine Diode 97, die seriell zum zweiten Schalter 94 angeordnet ist. Somit verbindet eine Serienschaltung, welche die Diode 97, den zweiten Schalter 94, die Stromquellenschaltung 95 und den Stromquellenwiderstand 96 umfasst, den Versorgungsspannungsanschluss 93 mit der zweiten Signalleitung 18.

Der zweite Schalter 94 ist an einem Steuereingang mit dem Prozessorkern 16 des zweiten Teilnehmers 12 verbunden. Ein Inverter 98 kann zwischen dem Prozessorkern 16 und dem Steueranschluss des zweiten Schalters 94 angeordnet sein. Der zweite Schalter 94 kann als Transistor, beispielsweise als Feldeffekttransistor, insbesondere als Metall-Oxid-Halbleiter Feldeffekttransistor, realisiert sein. Die beiden Anschlüsse des zweiten Schalters 94 sind mit einer Spannungsbegrenzungsschaltung 99, englisch voltage limiter, verbunden. Dem zweiten Schalter 94 wird über den Inverter 98 ein Signal S3 zugeleitet. Das Signal S3 ist ein von der Signaleingangsschaltung 33' zu übertragendes Signal.

Weiter umfasst die Signaleingangsschaltung 33' des zweiten Teilnehmers 12 einen zweiten Stromsensor 92, der mit der schaltbaren Stromquelle 91 gekoppelt ist. Ein Ausgang des zweiten Stromsensors 92 ist mit einem Eingang des Prozessorkerns 16 des zweiten Teilnehmers 12 verbunden. Der zweite Stromsensor 92 umfasst einen zweiten Komparator 100. Die beiden Eingänge des zweiten Komparators 100 sind mit den Anschlüssen der Serienschaltung, umfassend die Stromquellenschaltung 95 und den Stromquellenwiderstand 96, verbunden. Ein erster Anschluss des zweiten Komparators 100 ist somit an den Spannungsversorgungsanschluss 93 angeschlossen. Ein zweiter Eingang des zweiten Komparators 100 kann mit einem Anschluss des zweiten Schalters 94 verbunden sein. Ein Ausgang des zweiten Komparators 100 ist an den Ausgang des zweiten Stromsensors 92 angeschlossen. Der zweite Stromsensor 92 gibt ein Stromdetektionssignal S4 ab.

Der erste und der zweite Komparator 85, 100 können einen eingebauten Schwellwert aufweisen. Das Stromdetektionssignal S2 am Ausgang des ersten Komparators 85 ändert sich erst dann, wenn die Differenz der Spannungen an den beiden Eingängen des ersten Komparators 85 größer als der Schwellwert ist. Entsprechendes gilt für den zweiten Komparator 100 und das Stromdetektionssignal S4.

Die nicht-eingezeichnete Signalausgangsschaltung 33 des zweiten Teilnehmers 12 umfasst ebenfalls eine ersten Schalter und einen ersten Stromsensor, die zwischen der dritten Signalleitung 19 und dem Bezugspotentialanschluss 44 angeordnet ist und analog zum ersten Schalter 82 und zum ersten Stromsensor 81 des ersten Teilnehmers 11 realisiert ist. Auch der in Figur 4 nicht gezeigte Koordinator 13 weist zwischen dem Prozessorkern 20 und der ersten Signalleitung 17 die Signalausgangsschaltung 31 mit einem ersten Schalter und einem ersten Stromsensor auf, die analog zum ersten Schalter 82 und zum ersten Stromsensor 81 implementiert sind. Entsprechend weist auch die nicht-eingezeichnete Signaleingangsschaltung 32' des ersten Teilnehmers 11 eine schaltbare Stromquelle, die die erste Signalleitung 17 mit einem Versorgungsspannungsanschluss koppelt, und einen zweiten Stromsensor auf, welche analog zur schaltbaren Stromquelle 91 und dem zweiten Stromsensor 92 des zweiten Teilnehmers 12 realisiert sind.

In der Konfigurationsphase K werden die schaltbaren Stromquellen 91 aller Teilnehmer 11, 12 leitend geschaltet. Die ersten Schalter 82 aller Teilnehmer 11, 12 sind nicht leitend geschaltet. Zum Aktivieren des nachfolgenden Teilnehmers wird nun der erste Schalter 82 des Vorgängers leitend geschaltet. Soll beispielsweise der erste Teilnehmer 11 den zweiten Teilnehmer 12 aktivieren, so wird der erste Schalter 82 des ersten Teilnehmers 11 leitend geschaltet. Daher fließt ein Stromfluss durch die zweite Signalleitung 18. Der Strom fließt vom Versorgungsspannungsanschluss 93 über die schaltbare Stromquelle 91, welche leitend geschaltet ist, den ersten Schalter 82, welcher ebenfalls leitend geschaltet ist, und den ersten Stromsensor 81 zum Bezugspotentialanschluss 44. Am Versorgungsspannungsanschluss 93 ist eine Versorgungsspannung Vpow abgreifbar. Der zweite Stromsensor 92 des zweiten Teilnehmers 12 detektiert den Stromfluss und gibt das Stromdetektionssignal S4 an den Prozessorkern 16 des zweiten Teilnehmers 12 ab. Somit ist der zweite Teilnehmer 12 aktiviert. Der zweite Stromsensor 92 detektiert den Stromfluss dadurch, dass ein Spannungsabfall über der Stromquellenschaltung 95 und dem Stromquellenwiderstand 96 einen Schwellwert übersteigt. Die zweiten Stromsensoren 92 der weiteren Teilnehmer 11 detektieren keinen Stromfluss. Die Aktivierung erfolgt in Vorwärtsrichtung.

In entsprechender Weise kann der Koordinator 13 den ersten Teilnehmer 11 und der zweite Teilnehmer 12 den dritten Teilnehmer 61 in Vorwärtsrichtung aktivieren.

In der Betriebsphase B oder der Wiederanlaufphase W kann jedoch auch der erste Teilnehmer 11 vom zweiten Teilnehmer 12 aktiviert werden. Dabei werden durch einen Befehl des Koordinators 13 alle schaltbaren Stromquellen 91 aller Teilnehmer 11, 12 nicht leitend geschaltet. Die zweiten Schalter 94 aller Teilnehmer 11, 12 sind somit nicht leitend geschaltet. Hingegen sind die ersten Schalter 82 aller Teilnehmer 11, 12 leitend geschaltet. Wird nun aufgrund eines Befehls des Koordinators 13 die schaltbare Stromquelle 91 des zweiten Teilnehmers 12 leitend geschaltet, so detektiert ausschließlich der erste Stromsensor 81 des ersten Teilnehmers 11 einen Stromfluss. Der Strom fließt vom Versorgungsspannungsanschluss 93 über die schaltbare Stromquelle 91, welche leitend geschaltet ist, den ersten Schalter 82, welcher ebenfalls leitend geschaltet ist, und den ersten Stromsensor 81 zum Bezugspotentialanschluss 44. Die ersten Stromsensoren 81 der weiteren Teilnehmer 12 detektieren keinen Stromfluss. Somit wird vom zweiten Teilnehmer 12 ausschließlich ein Teilnehmer, nämlich der erste Teilnehmer 11, aktiviert. Die Aktivierung ist in Rückwärtsrichtung erfolgt.

In Figur 4 ist eine beispielhafte Ausführungsform zweier Teilnehmer 11, 12 der Busanordnung 10 in Verbindung mit der Select - Leitung, hier der zweiten Signalleitung 18, und beidseitiger Mess- und Prüfeinheit 32, 33' gezeigt. Die Verbindung ist entsprechend Figur 2G aktiv geschaltet. Der erste und der zweite Schalter 82, 94 sind leitend geschaltet. Die Aktivierung erfolgt in Rückwärtsrichtung. Bei der Aktivierung aktiviert der dem Koordinator 13 bekannte Teilnehmer, hier der zweite Teilnehmer 12, den unbekannten Teilnehmer, hier den ersten Teilnehmer 11.

In entsprechender Weise kann auch der dritte Teilnehmer 61 den zweiten Teilnehmer 12 in Rückwärtsrichtung aktivieren.

Die zweite Signalleitung 18 ist bidirektional ausgebildet. Der erste Teilnehmer 11 und der zweite Teilnehmer 12 sind derart realisiert, dass sie sich gegenseitig über die zweite Signalleitung 18 aktivieren können.

In einer alternativen, nicht gezeigten Ausführungsform ist der Stromsenkenwiderstand 84 weggelassen und durch eine Leitung ersetzt. Die beiden Eingänge des Komparators 85 sind somit an die beiden Anschlüsse der Stromsenke 83 angeschlossen.

Alternativ kann die Stromsenke 83 weggelassen und durch eine Leitung ersetzt sein. Die beiden Eingänge des Komparators 85 sind dann an die beiden Anschlüsse des Stromsenkenwiderstands 84 angeschlossen.

In einer alternativen, nicht gezeigten Ausführungsform ist der Stromquellenwiderstand 96 weggelassen und durch eine Leitung ersetzt. Somit sind die beiden Eingänge des zweiten Komparators 100 an die beiden Anschlüsse der Stromquellenschaltung 95 angeschlossen.

Alternativ kann die Stromquellenschaltung 95 weggelassen und durch eine Leitung ersetzt sein. Somit sind die beiden Eingänge des zweiten Komparators 100 an die beiden Anschlüsse des Stromquellenwiderstands 96 angeschlossen.

### Bezugszeichenliste

- 10: Busanordnung
- 11: erster Teilnehmer
- 12: zweiter Teilnehmer
- 13: Koordinator
- 14: Bus
- 15, 16: Prozessorkern
- 17: erste Signalleitung
- 18: zweite Signalleitung
- 19: dritte Signalleitung
- 20: Prozessorkern
- 21: mindestens eine Busleitung
- 22: weitere Busleitung
- 24, 25, 26: Transceiver
- 27: Versorgungsleitung
- 28: Spannungsversorgung
- 29, 30: Spannungsversorgung
- 31, 32, 33: Signalausgangsschaltung
- 32', 33': Signaleingangsschaltung
- 34: Mikrocontroller
- 35, 36: Applikationseinrichtung
- 42: Bezugspotentialleitung
- 44: Bezugspotentialanschluss
- 45, 46, 47: integrierte Schaltung
- 49: Schalter
- 50: Oszillator
- 51: weiterer Speicher
- 52: flüchtiger Speicher
- 53: nicht-flüchtiger Speicher
- 54: erster flüchtiger Speicher
- 55: erster nicht-flüchtiger Speicher
- 56: zweiter flüchtiger Speicher
- 57: zweiter nicht-flüchtiger Speicher
- 58: weiterer Transceiver
- 59: weiterer Busanschluss
- 60: Feldbus
- 61: dritter Teilnehmer
- 62: vierter Teilnehmer
- 63: vierte Signalleitung
- 81: erster Stromsensor
- 82: erster Schalter
- 83: Stromsenke
- 84: Stromsenkenwiderstand
- 85: erster Komparator
- 91: schaltbare Stromquelle
- 92: zweiter Stromsensor
- 93: Versorgungsspannungsanschluss
- 94: zweiter Schalter
- 95: Stromquellenschaltung
- 96: Stromquellenwiderstand
- 97: Diode
- 98: Inverter
- 99: Spanungsbegrenzer
- 100: zweiter Komparator
- A: Ausschaltphase
- B, B', B": Betriebsphase
- K: Konfigurationsphase
- S1 - S4: Signal
- t: Zeit
- Vpow: Versorgungsspannung
- W, W': Wiederanlaufphase

## Patentansprüche

1. Busanordnung, umfassend
- einen Koordinator (13),
- einen ersten Teilnehmer (11),
- einen zweiten Teilnehmer (12) und
- einen Bus (14), umfassend eine erste Signalleitung (17), die den ersten Teilnehmer (11) und den Koordinator (13) koppelt, eine zweite Signalleitung (18), die den zweiten Teilnehmer (12) an den ersten Teilnehmer (11) anschließt, und mindestens eine Busleitung (21), die den Koordinator (13) mit dem ersten und dem zweiten Teilnehmer (11, 12) verbindet,
wobei der Koordinator (13) ausgelegt ist, über die mindestens eine Busleitung (21) dem zweiten Teilnehmer (12) ein Telegramm mit einem Befehl zu senden, über die zweite Signalleitung (18) den ersten Teilnehmer (11) zu aktivieren, wobei der erste Teilnehmer (11) einen ersten Stromsensor (81) umfasst und der zweite Teilnehmer (12) eine schaltbare Stromquelle (91) umfasst, und wobei die zweite Signalleitung (18) den ersten Stromsensor (81) mit der schaltbaren Stromquelle (91) koppelt.

2. Busanordnung nach Anspruch 1,
wobei der Koordinator (13) ausgelegt ist, an alle Teilnehmer (11, 12) über die mindestens eine Busleitung (21) ein Telegramm, das eine erste Teilnehmeradresse enthält, zu senden, und
der erste Teilnehmer (11) ausgelegt ist, im aktivierten Zustand die erste Teilnehmeradresse zu speichern.

3. Busanordnung nach Anspruch 1 oder 2,
wobei der Koordinator (13) ausgelegt ist, in einer Konfigurationsphase (K) über die erste Signalleitung (17) den ersten Teilnehmer (11) zu aktivieren und über die mindestens eine Busleitung (21) ein Telegramm abzusenden, das eine erste Teilnehmeradresse enthält, und
der erste Teilnehmer (11) ausgelegt ist, die erste Teilnehmeradresse zu speichern.

4. Busanordnung nach Anspruch 3,
wobei der erste Teilnehmer (11) ausgelegt ist, in der Konfigurationsphase (K) über die zweite Signalleitung (18) den zweiten Teilnehmer (12) zu aktivieren, der Koordinator (13) ausgelegt ist, über die mindestens eine Busleitung (21) ein Telegramm, das eine zweite Teilnehmeradresse enthält, abzusenden, und der zweite Teilnehmer (12) ausgelegt ist, die zweite Teilnehmeradresse zu speichern.

5. Busanordnung nach einem der Ansprüche 1 bis 4,
wobei die Busanordnung (10) einen zusätzlichen Teilnehmer umfasst, der in einer Konfigurationsphase (K) am Bus (14) zwischen dem Koordinator (13) und dem ersten Teilnehmer (11) angeschlossen ist und nach der Konfigurationsphase (K) entfernt wird, und
der Koordinator (13) in einer Wiederanlaufphase (W) nach der Konfigurationsphase (K) ausgelegt ist, über die mindestens eine Busleitung dem zweiten Teilnehmer (12) das Telegramm mit dem Befehl zu senden, über die zweite Signalleitung (18) den ersten Teilnehmer (11) zu aktivieren.

6. Busanordnung nach einem der Ansprüche 3 bis 5,
wobei der erste Teilnehmer (11) in einer Ausschaltphase (A), die zwischen der Konfigurationsphase (K) und einer weiteren Konfigurationsphase (K') liegt, gegen einen weiteren ersten Teilnehmer ausgetauscht wird, und
wobei der Koordinator (13) ausgelegt ist, in der weiteren Konfigurationsphase (K') den weiteren ersten Teilnehmer über die erste Signalleitung (17) und/oder mittels des zweiten Teilnehmers (12) über die zweite Signalleitung (18) zu aktivieren.

7. Busanordnung nach Anspruch 6,
wobei der Koordinator (13) einen Schalter (49) umfasst und ausgelegt ist, die weitere Konfigurationsphase (K') nach Betätigung des Schalters (49) durchzuführen.

8. Busanordnung nach einem der Ansprüche 1 bis 7,
wobei zum Aktivieren des ersten Teilnehmers (11) der zweite Teilnehmer (12) ausgelegt ist, die schaltbare Stromquelle (91) zwischen einem leitenden Zustand und einem nicht-leitenden Zustand umzuschalten, und der erste Teilnehmer (11) ausgelegt ist, die Änderung eines durch die zweite Signalleitung (18) fließenden Stroms mit dem ersten Stromsensor (81) zu detektieren.

9. Busanordnung nach einem der Ansprüche 1 bis 8,
wobei der erste Teilnehmer (11) einen ersten Schalter (82), der seriell zum ersten Stromsensor (81) angeordnet ist, umfasst und
der zweite Teilnehmer (12) einen zweiten Stromsensor (92) umfasst, der mit der schaltbaren Stromquelle (91) gekoppelt ist, wobei der zweite Stromsensor (92) ausgelegt ist, den durch die zweite Signalleitung (18) fließenden Strom zu detektieren.

10. Busanordnung nach Anspruch 9,
wobei zum Aktivieren des zweiten Teilnehmers (12) der erste Teilnehmer (11) ausgelegt ist, den ersten Schalter (82) zwischen einem leitenden Zustand und einem nicht-leitenden Zustand umzuschalten, und der zweite Teilnehmer (12) ausgelegt ist, die Änderung eines durch die zweite Signalleitung (18) fließenden Stroms mit dem zweiten Stromsensor (92) zu detektieren.

11. Verfahren zum Betreiben einer Busanordnung, umfassend:
Senden eines Telegramm von einem Koordinator (13) über mindestens eine Busleitung (21) an einen zweiten Teilnehmer (12) mit einem Befehl, dass der zweite Teilnehmer (12) über eine zweite Signalleitung (18) einen ersten Teilnehmer (11) aktiviert,
wobei der Bus (14) umfasst:
- eine erste Signalleitung (17), die den ersten Teilnehmer (11) und den Koordinator (13) koppelt,
- die zweite Signalleitung (18), die den zweiten Teilnehmer (12) an den ersten Teilnehmer (11) anschließt, und
- die mindestens eine Busleitung (21), die den Koordinator (13) mit dem ersten und dem zweiten Teilnehmer (11, 12) verbindet,
wobei der erste Teilnehmer (11) einen ersten Stromsensor (81) umfasst und der zweite Teilnehmer (12) eine schaltbare Stromquelle (91) umfasst, und
wobei die zweite Signalleitung (18) den ersten Stromsensor (81) mit der schaltbaren Stromquelle (91) koppelt.

## Claims

1. Bus arrangement comprising
- a coordinator (13),
- a first subscriber (11),
- a second subscriber (12) and
- a bus (14) comprising a first signal line (17) coupling the first subscriber (11) and the coordinator (13), a second signal line (18) connecting the second subscriber (12) to the first subscriber (11), and at least one bus line (21) connecting the coordinator (13) to the first and second subscribers (11, 12),
wherein the coordinator (13) is designed to send a telegram to the second subscriber (12) via the at least one bus line (21), said telegram containing a command to activate the first subscriber (11) via the second signal line (18), wherein the first subscriber (11) comprises a first current sensor (81) and the second subscriber (12) comprises a switchable current source (91), and wherein the second signal line (18) couples the first current sensor (81) to the switchable current source (91).

2. Bus arrangement according to claim 1,
wherein the coordinator (13) is designed to send a telegram containing a first subscriber address to all subscribers (11, 12) via the at least one bus line (21), and
the first subscriber (11) is designed to store the first subscriber address when in the activated state.

3. Bus arrangement according to claim 1 or 2,
wherein the coordinator (13) is designed, in a configuration phase (K), to activate the first subscriber (11) via the first signal line (17) and to transmit a telegram containing a first subscriber address via the at least one bus line (21), and
the first subscriber (11) is designed to store the first subscriber address.

4. Bus arrangement according to claim 3,
wherein the first subscriber (11) is designed, in the configuration phase (K), to activate the second subscriber (12) via the second signal line (18), the coordinator (13) is designed to transmit a telegram containing a second subscriber address via the at least one bus line (21), and the second subscriber (12) is designed to store the second subscriber address.

5. Bus arrangement according to any one of claims 1 to 4,
wherein the bus arrangement (10) comprises an additional subscriber, which is connected to the bus (14) between the coordinator (13) and the first subscriber (11) in a configuration phase (K) and is removed after the configuration phase (K), and
the coordinator (13) is designed, in a restart phase (W) after the configuration phase (K), to send the telegram to the second subscriber (12) via the at least one bus line, said telegram containing the command to activate the first subscriber (11) via the second signal line (18).

6. Bus arrangement according to any one of claims 3 to 5,
wherein the first subscriber (11) is exchanged for another first subscriber, in a turn-off phase (A) between the configuration phase (K) and a further configuration phase (K'), and wherein the coordinator (13) is designed, in the further configuration phase (K'), to activate the further first subscriber via the first signal line (17) and/or via the second signal line (18) by means of the second subscriber (12).

7. Bus arrangement according to claim 6,
wherein the coordinator (13) comprises a switch (49) and is designed to carry out the further configuration phase (K') after actuation of the switch (49).

8. Bus arrangement according to any one of claims 1 to 7,
wherein for activating the first subscriber (11), the second subscriber (12) is designed to switch the switchable current source (91) between a conducting state and a non-conducting state, and the first subscriber (11) is designed to detect the change of a current flowing through the second signal line (18), using the first current sensor (81).

9. Bus arrangement according to any one of claims 1 to 8,
wherein the first subscriber (11) comprises a first switch (82) arranged serially to the first current sensor (81), and
the second subscriber (12) comprises a second current sensor (92) coupled to the switchable current source (91), wherein the second current sensor (92) is designed to detect the current flowing through the second signal line (18).

10. Bus arrangement according to claim 9,
wherein, for activating the second subscriber (12), the first subscriber (11) is designed to switch the first switch (82) between a conducting state and a non-conducting state, and the second subscriber (12) is designed to detect the change of a current flowing through the second signal line (18), using the second current sensor (92).

11. Method for operating a bus arrangement, comprising:
Sending a telegram from a coordinator (13) via at least one bus line (21) to a second subscriber (12), said telegram containing a command that the second subscriber (12) activates a first subscriber (11) via a second signal line (18),
wherein the bus (14) comprises:
- a first signal line (17) coupling the first subscriber (11) and the coordinator (13),
- the second signal line (18) connecting the second subscriber (12) to the first subscriber (11), and
- the at least one bus line (21) connecting the coordinator (13) to the first and second subscribers (11, 12),
wherein the first subscriber (11) comprises a first current sensor (81) and the second subscriber (12) comprises a switchable current source (91), and wherein the second signal line (18) couples the first current sensor (81) to the switchable current source (91).

## Revendications

1. Système de bus, comprenant
- un coordinateur (13),
- un premier abonné (11),
- un second abonné (12) et
- un bus (14), comprenant un premier câble de signal (17) qui couple le premier abonné (11) et le coordinateur (13), un second câble de signal (18) qui connecte le second abonné (12) au premier abonné (11), et au moins un câble de bus (21) qui relie le coordinateur (13) aux premier et second abonnés (11, 12),
dans lequel le coordinateur (13) est conçu pour envoyer, par l'intermédiaire du au moins un câble de bus (21), au second abonné (12) un télégramme avec une instruction d'activation du premier abonné (11) via le second câble de signal (18),
dans lequel le premier abonné (11) comprend un premier capteur de courant (81) et le second abonné (12) comprend une source de courant commutable (91), et dans lequel le second câble de signal (18) couple le premier capteur de courant (81) à la source de courant commutable (91).

2. Système de bus selon la revendication 1,
dans lequel le coordinateur (13) est conçu envoyer à tous les abonnés (11, 12) par l'intermédiaire du au moins un câble de bus (21) un télégramme contenant une première adresse d'abonné, et le premier abonné (11) est conçu, dans l'état activé, pour mémoriser la première adresse d'abonné.

3. Système de bus selon la revendication 1 ou 2,
dans lequel le coordinateur (13) est conçu pour activer, par l'intermédiaire du premier câble de signal (17), le premier abonné (11) dans une phase de configuration (K) et pour transmettre, par l'intermédiaire du au moins un câble de bus (21), un télégramme contenant une premier adresse d'abonné, et
le premier abonné (11) est conçu pour stocker la première adresse d'abonné.

4. Système de bus selon la revendication 3,
dans lequel le premier abonné (11) est conçu pour activer le second abonné (12) dans la phase de configuration (K) par l'intermédiaire du second câble de signal (18), le coordinateur (13) est conçu, par l'intermédiaire du au moins un câble de bus (21), pour transmettre un télégramme contenant une seconde adresse d'abonné, et le second abonné (12) est conçu pour stocker la second adresse d'abonné.

5. Système de bus selon l'une des revendications 1 à 4,
dans lequel le système de bus (10) comprend un abonné supplémentaire qui, dans une phase de configuration (K), est connectée au bus (14) entre le coordinateur (13) et le premier abonné (11), et est retiré après la phase de configuration (K), et
le coordinateur (13), dans une phase de redémarrage (W) après la phase de configuration (K), est conçu pour envoyer, par l'intermédiaire du au moins un câble de bus, le télégramme au second abonné (12) avec l'instruction d'activer le premier abonné (11), par l'intermédiaire du second câble de signal (18).

6. Système de bus selon l'une des revendications 3 à 5,
dans lequel le premier abonné (11), dans une phase d'extinction (A) qui se situe entre la phase de configuration (K) et une phase de configuration supplémentaire (K'), est échangé contre un premier abonné supplémentaire, et
dans lequel le coordinateur (13) est conçu, dans la phase de configuration supplémentaire (K'), pour activer le premier abonné supplémentaire par l'intermédiaire du premier câble de signal (17) et/ou au moyen du second abonné (12) par l'intermédiaire du second câble de signal (18).

7. Système de bus selon la revendication 6,
dans lequel le coordinateur (13) comprend un commutateur (49) et est conçu pour effectuer la phase de configuration supplémentaire (K') après l'actionnement du commutateur (49).

8. Système de bus selon l'une des revendications 1 à 7,
dans lequel, pour activer le premier abonné (11), le second abonné (12) est conçu pour commuter la source de courant commutable (91) entre un état conducteur et un état non conducteur, et le premier abonné (11) est conçu pour détecter un changement d'un courant circulant à travers le second câble de signal (18) à l'aide du premier capteur de courant (81).

9. Système de bus selon l'une des revendications 1 à 8,
dans lequel le premier abonné (11) comprend un premier commutateur (82) qui est agencé en série par rapport au premier capteur de courant (81), et
le second abonné (12) comprend un second capteur de courant (92) qui couplé à la source de courant commutable (91), dans lequel le second capteur de courant (92) est conçu pour détecter le courant circulant à travers le second câble de signal (18).

10. Système de bus selon la revendication 9,
dans lequel, pour activer le second abonné (12), le premier abonné (11) est conçu pour commuter le premier commutateur (82) entre un état conducteur et un état non conducteur, et le second abonné (12) est conçu pour détecter le changement d'un courant circulant à travers le second câble de signal (18) circulant à l'aide du second capteur de courant (92).

11. Procédé pour faire fonctionner un système de bus, comprenant :
l'envoi d'un télégramme d'un coordinateur (13), par l'intermédiaire d'au moins un câble de bus (21), à un second abonné (12) avec une instruction pour le second abonné (12) d'activer un premier abonné (11) par l'intermédiaire d'un second câble de signal (18),
dans lequel le bus (14) comprend :
- un premier câble de signal (17), qui couple le premier abonné (11) et le coordinateur (13),
- le second câble de signal (18), qui connecte le second abonné (12) au premier abonné (11), et
- le au moins un câble de bus (21) reliant le coordinateur (13) aux premier et second abonnés (11, 12),
dans lequel le premier abonné (11) comprend un premier capteur de courant (81) et le second abonné (12) comprend une source de courant commutable (91), et dans lequel le second câble de signal (18) couple le premier capteur de courant (81) avec la source de courant commutable (91).
